# EUROPÄISCHE PATENTSCHRIFT

(11) **EP 2 878 249 B1**
(45) Veröffentlichungstag und Bekanntmachung des Hinweises auf die Patenterteilung: **17.11.2021**
(21) Anmeldenummer: 14184083.5
(22) Anmeldetag: 09.09.2014
(51) Int. Cl.: A47L 7/00, A47L 9/28

(54) **Mehrzweckstaubsauger**
Multipurpose vacuum cleaner
Aspirateur multifonction

(30) Priorität: 31.10.2013 DE 102013018278
(43) Veröffentlichungstag der Anmeldung: 03.06.2015
(60) Teilanmeldung: 20195645.5
(73) Patentinhaber: Metabowerke GmbH, 72622 Nürtingen (DE)
(72) Erfinder: Siegele, Volker, 71364 Winnenden (DE); Hahn, Wolfgang, 72555 Metzingen (DE); Meisohle, Simon, 72622 Nürtingen (DE); Garbrecht, Horst, 75395 Ostelsheim (DE); Gräber, Jochen, 73266 Bissingen/Teck (DE); Neika, Patrick, 73268 Erkenbrechtsweiler (DE); Seyfferth, Falko, 98704 Langewiesen (DE)
(74) Vertreter: Markfort, Iris-Anne Lucie

(56) Entgegenhaltungen:
- EP-A2- 2 433 543
- EP-B1- 2 433 543
- US-A1- 2004 088 817
- None

## Beschreibung

Die Erfindung betrifft ein Werkzeugsystem umfassend eine elektrisch angetriebene Werkzeugmaschine sowie einen Mehrzweckstaubsauger, insbesondere zur Benutzung mit einer elektrisch angetriebenen Werkzeugmaschine.

Mehrzweckstaubsauger können dazu genutzt werden, sowohl nass als auch trocken zu saugen. Üblicherweise werden sie im Zusammenhang mit einer Werkzeugmaschine dazu genutzt, bei der Bearbeitung eines Werkstücks mit der Werkzeugmaschine anfallende Partikel, beispielsweise Bohrstaub und dergleichen, auf- oder abzusaugen, um die bei der Bearbeitung anfallende Verschmutzung möglichst gering zu halten.

Aus dem Stand der Technik sind unterschiedlichste Geräte dieser Art bekannt, die sowohl von Akkumulatoren (wiederaufladbaren Batterien) als auch über elektrische Kabel mit Strom versorgt werden können. Abhängig von der gewünschten Art der Anwendung eines solchen Mehrzweckstaubsaugers weisen die aus dem Stand der Technik bekannten Mehrzweckstaubsauger zusätzliche Merkmale auf, die aus Anwendersicht ihre Handhabung vereinfachen bzw. komfortabler gestalten sollen.

So ist gemäß einem ersten Komfortaspekt ein mobiler Einsatz eines solchen Mehrzweckstaubsaugers wünschenswert. Entsprechend ist beispielsweise aus dem Dokument US 7,653,963 B2 (Anmeldenummer US 2004/0088817 A1) ein tragbarer Staubsauger zum Nass- und Trockensaugen bekannt, der gemäß seiner Beschreibung über unterschiedliche Stromquellen betrieben werden kann. Über eine erste Stromleitung kann der Sauger mit einer üblichen Steckdose verbunden werden und gibt im verbundenen Zustand seine Netzwerkspannung zur Leistungsversorgung ab. Alternativ kann die Leistungsversorgung auch über eine zweite elektrische Leitung erfolgen, die einen Stecker zum Anstecken an einen Zigarettenanzünder aufweist, so dass beispielsweise die Netzwerkspannung eines Automobils zum Betrieb des Saugers genutzt werden kann. Weiterhin kann die Leistungsversorgung des Saugers ebenfalls über den Anschluss einer Batterie sichergestellt werden, wobei zusätzlich ein Ladekreis eine angeschlossene Batterie immer dann laden kann, wenn der Sauger über eine der beiden anderen Leitungen mit einem Stromnetz verbunden ist. Als ein Nachteil kann bei dieser Ausführungsform jedoch hervorgehoben werden, dass die angeschlossene Batterie nur dann geladen werden kann, wenn der Motor des Saugers nicht läuft und folglich keinen Strom benötigt. Das Dokument US 6,448,732 B1 offenbart einen tragbaren Staubsauger, der akkubetrieben oder über einen Netzanschluss mit Leistung versorgt werden kann. Dabei können insbesondere unterschiedlich leistungsstarke und damit schwere Akkumulatoren in einer hierfür vorgesehenen Aufnahmekammer aufgenommen und darin geladen werden. Die Ladung der Akkumulatoren erfolgt nicht über die ohnehin vorgesehene Stromleitung des Staubsaugers. Stattdessen ist zum Laden eines angeschlossenen Akkumulators ein zusätzliches separates Batterieladegerät vorgesehen.

Weitere Hybridsauger, d. h. Staubsauger, die sowohl elektrisch betrieben als auch batteriebetrieben werden können, sind beispielsweise aus den Dokumenten US 2009/0083932 A1, EP2196282 und US 2008/0284363 A1 bekannt. Schließlich offenbart das Dokument EP 1 419 723 B1 einen tragbaren Mehrzweckstaubsauger, der in der Art eines Hybridsaugers über ein elektrisches Kabel mit der Spannungsversorgung verbunden werden kann oder über eine Batterie die Spannungsversorgung sicherstellt.

Ein weiterer Komfortaspekt, neben der mobilen Stromversorgung des Mehrzweckstaubsaugers, betrifft dessen Aktivierung. Grundsätzlich ist es aus dem Stand der Technik bekannt, einen Mehrzweckstaubsauger mit einer Werkzeugmaschine zu verbinden, wobei sowohl die Werkzeugmaschine als auch der Mehrzweckstaubsauger über jeweils einen separaten Ein-/Ausschalter verfügen. Der Anwender muss zum Ein- oder Ausschalten beider Geräte jedes der Geräte durch Betätigung des zugehörigen Schalters aktivieren bzw. deaktivieren.

In diesem Zusammenhang offenbart die Druckschrift EP 2 433 543 A2 eine Lösung, bei der ein Staubsauger über einen Netzanschluss mit Leistung versorgt werden und gleichzeitig mit einer Kreissäge betrieben werden kann. Die Einschaltung des Staubsaugers erfolgt in Abhängigkeit von der Leistungsversorgung der Kreissäge.

Daneben ist aus dem Dokument US 5,709,007 ein fernsteuerbarer Staubsauger bekannt, der eine Saugereinheit und eine Bewegungseinheit aufweist, wobei mit Hilfe einer Fernbedienung sowohl die Saugereinheit als auch die Bewegungseinheit angesteuert werden können. Ein Betrieb in Zusammenhang mit einer Werkzeugmaschine ist in diesem Dokument jedoch nicht erwähnt.

Schließlich offenbart das Dokument DE 199 02 130 A1 einen Staubsauger mit einer Fernsteuervorrichtung, bei der an einem Handgriff des Saugers eine Tasteneingabeeinheit zur Steuerung des Motors des Staubsaugers vorgesehen ist, die mittels einer Funkübertragung oder über ein Übertragungskabel eine Tastensignalausgabe zum Ein- bzw. Ausschalten des Staubsaugers übertragen kann.

Zur weiteren Vereinfachung und Erhöhung des Komforts für einen Anwender bei der kombinierten Benutzung eines Mehrzweckstaubsaugers mit einer elektrisch angetriebenen Werkzeugmaschine schlägt die vorliegende Erfindung ein Werkzeugsystem mit den Merkmalen des Anspruchs 1 vor.

Demgemäß weist die Stromversorgung des Mehrzweckstaubsaugers wenigstens einen elektrischen Anschluss auf, über den die angetriebene Werkzeugmaschine mittels eines Kabels mit der Stromversorgung verbunden werden kann, so dass die Stromversorgung des Mehrzweckstaubsaugers zum gleichzeitigen Betrieb des Mehrzweckstaubsauger und der verbundenen Werkzeugmaschine den elektrischen Strom sowohl dem elektrischen Antrieb des Mehrzweckstaubsaugers als auch dem elektrischen Antrieb der verbundenen Werkzeugmaschine zuzuführen vermag. Auf diese Weise ist es möglich, unabhängig davon, ob der Mehrzweckstaubsauger mittels einer Batterie oder über eine Wechselstromquelle mit Strom versorgt wird, auch die in Kombination mit dem Sauger nutzbare Werkzeugmaschine über die Stromversorgung des Mehrzweckstaubsaugers mit elektrischem Strom zu versorgen. Dies hat den Vorteil, dass insbesondere bei Baustellen, bei denen keine oder nur wenige Steckdosen zum Anschluss mit einer Wechselstromquelle verfügbar sind, der Mehrzwecksauger zugleich eine übliche Werkzeugmaschine mit Strom versorgen kann. Weiterhin kann der Mehrzweckstaubsauger selbst von einer wiederaufladbaren Batterie versorgt werden, wodurch eine vollkommene Unabhängigkeit von dem Vorhandensein einer Wechselstromquelle erreicht werden kann. Hierdurch werden der Komfort und die Mobilität der Maschinenkombination für den Anwender gegenüber bekannten Lösungen nennenswert erhöht.

Weiterhin kann die Stromversorgung des Mehrzweckstaubsaugers einen Aktivierungsmechanismus zum Ein- und Ausschalten des elektrischen Antriebs des Mehrzweckstaubsaugers umfassen, der geeignet ist, in Abhängigkeit von dem Betriebszustand einer mit dem Mehrzweckstaubsauger verbundenen elektrisch angetriebenen Werkzeugmaschine den elektrischen Antrieb des Mehrzweckstaubsaugers ein- oder auszuschalten, wobei der Aktivierungsmechanismus einen Sensor umfasst, der geeignet ist, den Betriebszustand der elektrisch angetriebenen Werkzeugmaschine zu detektieren, sowie eine Steuerungseinheit, die basierend auf dem detektierten Betriebszustand der Werkzeugmaschine den elektrischen Antrieb des Mehrzweckstaubsaugers ein-oder auszuschalten vermag.

Im Unterschied zu bekannten Lösungen reicht es bei der vorliegenden Erfindung aus, wenn der Anwender die Werkzeugmaschine einschaltet, um auch eine Aktivierung des Mehrzweckstaubsaugers zu bewirken. Auch hierdurch wird wiederum der Komfort für den Anwender verbessert, da er nur einen Schalter zum Aktivieren und Deaktivieren beider Geräte betätigen muss. Ferner wird insbesondere bei längeren Arbeitsabläufen, z. B. beim Bohren von einer Vielzahl von Löchern, ein energieeffizienterer Betrieb des Mehrzweckstaubsaugers erreicht, da in der Regel der Anwender in solchen Fällen die aus dem Stand der Technik bekannten Lösungen zwischen den einzelnen Arbeitsgängen nicht ausschalten würde, die erfindungsgemäße Lösung jedoch eine automatische Abschaltung des Saugers bewirkt, wenn die Werkzeugmaschine ausgeschaltet wird. Desweiteren wird durch die vorgeschlagene Lösung der Erfindung der Arbeitslärm vermindert. Selbstverständlich können die beiden Erfindungen gemäß dem ersten und dem zweiten Erfindungsaspekt zur weiteren Erhöhung des Komforts und der Mobilität einer Kombination eines Mehrzweckstaubsaugers mit einer elektrisch angetriebenen Werkzeugmaschine miteinander kombiniert werden.

Gemäß der Erfindung weist die Stromversorgung wenigstens einen weiteren elektrischen Anschluss für wenigstens eine wiederaufladbare Batterie auf, über den sie die elektrisch angeschlossene Batterie zu laden vermag. Der Ladevorgang einer derartigen wiederaufladbaren Batterie kann dabei auf einen Betriebszustand beschränkt sein, bei dem der Mehrzweckstaubsauger über ein elektrisches Kabel mit einer Wechselstromquelle verbunden ist. Alternativ oder zusätzlich kann jedoch die wiederaufladbare Batterie auch dann geladen werden, wenn der Mehrzweckstaubsauger selbst über eine Batterie betrieben wird bzw. nicht mit einer Wechselstromquelle, sondern nur mit einer weiteren Batterie verbunden ist. Der Ladevorgang kann ferner nicht, wie bei bekannten Lösungen, nur dann erfolgen, wenn sowohl der Mehrzwecksauger als auch eine gegebenenfalls damit elektrisch verbundene Werkzeugmaschine deaktiviert sind, d.h. keinen Strom benötigen. Stattdessen ladet die Stromversorgung auch dann eine angeschlossene Batterie, wenn der Mehrzweckstaubsauger und gegebenenfalls eine damit verbundene Werkzeugmaschine in Betrieb sind. Hierzu kann die Stromversorgung des Mehrzweckstaubsaugers geeignet sein, zu ermitteln, ob bei einem aktivierten Mehrzwecksauger und ggf. einer damit elektrisch verbundene Werkzeugmaschine ebenfalls aktivierten Werkzeugmaschine die Stromquelle zusätzlich noch ausreichend Strom zur Verfügung stellt, um weiterhin auch eine angeschlossene wiederaufladbare Batterie zu laden.

Der Mehrzweckstaubsauger kann ferner ein Gehäuse umfassen, an dem wenigstens ein Aufnahmeschacht zur sicheren Aufnahme einer mit der Stromversorgung verbindbaren Batterie vorgesehen ist.

Alternativ oder zusätzlich kann der Mehrzweckstaubsauger ein Gehäuse mit wenigstens einem Aufnahme- und/oder Befestigungsabschnitt aufweisen, in bzw. an dem wenigstens eine angetriebene Werkzeugmaschine und/oder eine Halterung für ein Ladegerät für wiederaufladbare Batterien sicher aufgenommen und/oder lösbar befestigt werden kann bzw. können.

Bei einer derartigen Ausgestaltung dient das Gehäuse des Mehrzweckstaubsaugers nicht nur zur sicheren Aufnahme der innenliegenden Komponenten des Mehrzweckstaubsaugers, wie beispielsweise des Motors oder Lüfters, sondern auch zur Aufnahme und/oder Befestigung einer angetriebenen Werkzeugmaschine und/oder eines Ladegeräts für wiederaufladbare Batterien. Hierdurch wird ein besonders kompakter Aufbau für einen Anwender bereitgestellt, der den Transport des Mehrzweckstaubsaugers mit etwaigen Zubehörteilen, wie den vorstehend genannten, ermöglicht. Selbstverständlich können an dem Gehäuse auch weitere Aufnahme- und/oder Befestigungsabschnitte vorgesehen sein, die zur Aufnahme weiterer Zubehörteile, beispielsweise Werkzeuge der elektrisch angetriebenen Werkzeugmaschine und dergleichen, genutzt werden können.

Es kann ferner vorgesehen sein, dass der Sensor des Aktivierungsmechanismus an der verbundenen Werkzeugmaschine anbringbar ist und in Abhängigkeit von der Lage der Werkzeugmaschine, von einer Lageveränderung der Werkzeugmaschine oder von einer von der Werkzeugmaschine im Betriebszustand verursachten Schwingung oder einer Druckveränderung ein Ein- oder Ausschalten des Mehrzweckstaubsaugers veranlasst.

Der Begriff "Schwingungen" bezeichnet in diesem Zusammenhang alle Formen von Schwingungen, beispielsweise Vibrationen an der Werkzeugmaschine oder von der Werkzeugmaschine emittierte Schallschwingungen.

So ist es beispielsweise denkbar, dass die Werkzeugmaschine einen Bohrhammer umfasst, an dem ein Lagesensor vorgesehen ist. Wird nun der Bohrhammer aufgenommen oder mit ihm hantiert, so können diese Bewegungen von dem Lagesensor detektiert werden. Das Sensorsignal, welches an die Steuerungseinheit weitergegeben wird, veranlasst die Steuerungseinheit wiederum dann, den Mehrzweckstaubsauger ein- bzw. auszuschalten.

Alternativ oder zusätzlich zu einem Lagesensor kann selbstverständlich auch ein Beschleunigungssensor vorgesehen sein, der an der Werkzeugmaschine, beispielsweise einem Bohrhammer, angebracht ist. Ein solcher Beschleunigungssensor ist geeignet, an der Werkzeugmaschine auftretende Vibrationen zu detektieren und entsprechend ein Signal an die Steuerungseinheit weiterzugeben. Insbesondere bei der Ausgestaltung der Werkzeugmaschine als ein Bohrhammer bietet sich ein solcher Sensor an, da bei dieser Art von Werkzeugmaschinen massive Vibrationen durch das Schlagwerk entstehen, welche einfach von einem entsprechenden Sensor erfasst werden können.

Alternativ oder zusätzlich kann der Sensor jedoch auch als Mikrofon ausgestaltet sein, das Motor- bzw. Arbeitsgeräusche der Werkzeugmaschine zu detektieren vermag. Ein solcher Sensor bietet sich insbesondere bei derartigen Werkzeugmaschinen an, bei deren Betrieb nennenswerte Arbeitsgeräusche aufkommen.

Alternativ oder zusätzlich kann der Sensor auch als Drucksensor ausgestaltet sein, der geeignet ist, eine Druckveränderung zu detektieren. Beispielsweise kann die kombinierte elektrisch angetriebene Werkzeugmaschine einen Bohrhammer mit einem als Saugerteleskop ausgebildeten Mehrzweckstaubsauger umfassen. Sobald das Saugerteleskop eine Fläche des zu bearbeitenden Werkstücks berührt, entsteht innerhalb des Teleskops ein Unterdruck. Ein solcher Unterdruck kann von einem Drucksensors ermittelt werden, so dass dieser ein entsprechendes Signal an die Steuerungseinheit weiterzugeben vermag. Auch kann an dem Werkzeug selbst eine Druckveränderung mittels eines Sensors festgestellt werden, beispielsweise wenn das Werkzeug der elektrisch angetriebenen Werkzeugmaschine zur Bearbeitung eines Werkstücks mit diesem in Kontakt gebracht wird. Das Werkstück stellt dabei einen zu dem von dem Werkzeug aufgebrachten Druck bei der Bearbeitung entgegenwirkenden Druck bereit, der sich sensorisch ermitteln lässt.

Alternativ oder zusätzlich kann sensorisch auch eine auf das Werkzeug wirkende Gegenkraft, beispielsweise der Widerstand des Werkstücks gegen die Bohrdrehung des Werkzeugs, ermittelt werden

Je nach Ausgestaltung der Werkzeugmaschine kann alternativ oder zusätzlich zu einem solchen Drucksensor auch eine Aktivierung eines Mikroschalters vorgesehen sein, die durch einen Kontakt oder Widerstand des zu bearbeitenden Werkstücks mit dem Werkzeug oder einer zusätzlichen Komponente der Werkzeugmaschine, wie einem Teleskoprohr, betätigt wird.

Weiterhin kann zusätzlich oder alternativ auch eine Reflexlichtschranke zum Detektieren des Betriebszustands der elektrisch angetriebenen Werkzeugmaschine genutzt werden, die beispielsweise eine Relativbewegung des Werkzeugs bei Bearbeitung eines Werkstücks oder einer zusätzlichen Komponente, wie einem Teleskoprohr, detektiert und ein entsprechendes Signal an die Steuerungseinheit weiterzuleiten vermag.

Das Sensorsignal kann alternativ auch von einem Sensor erzeugt werden, der die Leistungsversorgung der Werkzeugmaschine überwacht. So kann der Sensor auch an einer wiederaufladbaren Batterie der Werkzeugmaschine oder an dem Motor der Werkzeugmaschine angebracht sein und dann, wenn die Werkzeugmaschine aktiv mit Strom versorgt wird, ein entsprechendes Signal zur Aktivierung des Saugers abgeben.

Gegebenenfalls kann der Sensor hierzu in einem Adapter vorgesehen sein, der zwischen der Werkzeugmaschine und ihrem Akkumulator angeordnet ist. Letztere Lösung ist vor allem dann von Vorteil, wenn eine Werkzeugmaschine zur Benutzung mit einem erfindungsgemäßen Mehrzweckstaubsauger nachgerüstet werden soll.

Alternativ zu einem an der Werkzeugmaschine angebrachten Sensor kann der Mehrzweckstaubsauger mittels seines Absaugschlauchs mit der Werkzeugmaschine verbindbar sein und der Sensor des Mehrzweckstaubsaugers innerhalb des Absaugschlauchs angebracht sein und in Abhängigkeit von einer Lageveränderung des Absaugschlauchs, einer Druckveränderung innerhalb des Absaugschlauchs oder einer von der Werkzeugmaschine im Betriebszustand verursachten Schwingung am Absaugschlauch ein Ein- oder Ausschalten des Mehrzweckstaubsaugers veranlassen. Unter den Begriff "Schwingung" fällt beispielsweise, wie vorliegend auch, sowohl eine Vibration als auch eine Schallschwingung.

Unabhängig davon, wo der Sensor angebracht ist, kann dieser ein kabelloses Signal an eine Empfangseinheit der Steuerungseinheit des Aktivierungsmechanismus senden, das von der Steuerungseinheit verarbeitet wird und basierend auf dem die Steuerungseinheit die Stromversorgung dazu veranlasst, den elektrischen Antrieb des Mehrzweckstaubsaugers mit Strom zu versorgen oder nicht.

Bei einer Ausgestaltung mit einem Absaugschlauch kann alternativ ein Draht in dem Absaugschlauch vorgesehen sein, der den Sensor mit einer Empfangseinheit der Steuerungseinheit des Aktivierungsmechanismus verbindet, wobei der Sensor über diesen Draht ein Signal an die Empfangseinheit sendet, das von der Steuerungseinheit verarbeitet wird und basierend auf dem die Steuerungseinheit die Stromversorgung dazu veranlasst, den elektrischen Antrieb des Mehrzweckstaubsaugers mit Strom zu versorgen oder nicht.

Grundsätzlich können die beiden Alternativen, nämlich dass der Sensor ein kabelloses Signal sendet bzw. dass der Sensor über den Draht das Signal an eine Empfangseinheit sendet, nebeneinander vorgesehen sein, um die Zuverlässigkeit der Signalübertragung zu erhöhen.

Bei einer Ausführungsform der Erfindung kann der Aktivierungsmechanismus den elektrischen Antrieb des Mehrzweckstaubsaugers abhängig von dem detektierten Betriebszustand der Werkzeugmaschine in einem Modus mit einer reduzierten Drehzahl und einem Modus mit einer Arbeitsdrehzahl betreiben. Bei dieser Ausgestaltung wird der Mehrzweckstaubsauger folglich nicht vollständig abgeschaltet, wenn die Werkzeugmaschine sich in einem inaktiven Betriebszustand befindet, sondern läuft mit einer geringen "Stand-by"-Drehzahl weiter. Auf diese Weise wird die Effizienz des Mehrzweckstaubsaugers erhöht, da dieser eine kürzere Anlaufphase zum Erreichen der Arbeitsdrehzahl des elektrischen Antriebs des Mehrzweckstaubsaugers benötigt.

Dabei bezeichnet die Drehzahl in Zusammenhang mit dem elektrischen Antrieb des Mehrzweckstaubsaugers die Drehzahl des Lüfters zur Bereitstellung eines Unterdrucks, wie dieser üblicherweise bei Staubsaugern vorgesehen ist.

Schließlich kann der Aktivierungsmechanismus mittels eines Aktivierungsschalters aktiviert werden. Der Anwender aktiviert folglich vor Beginn der gewünschten

Benutzung des Aktivierungsmechanismus des Mehrzweckstaubsaugers, wonach dieser mit Hilfe der vorstehend beschriebenen Merkmale in Abhängigkeit von dem Betriebszustand der Werkzeugmaschine ein- bzw. ausgeschaltet werden kann. Wird der Mehrzweckstaubsauger nicht mehr benötigt, kann auch der Aktivierungsmechanismus ausgeschaltet werden.

Die weiteren Merkmale der Erfindung sind nachfolgend in den Ansprüchen und der Figurenbeschreibung unter Bezugnahme auf die beigefügten Figuren näher beschrieben. Die Figuren zeigen eine bevorzugte Ausführungsform der Erfindung, die mehrere Merkmale der Erfindung in Kombination miteinander aufweist. Selbstverständlich können diese jedoch auch einzeln und unabhängig voneinander bei der Erfindung Verwendung finden. Der Fachmann wird die beschriebenen Merkmale demgemäß auch einzeln betrachten und gegebenenfalls zu sinnvollen weiteren Unterkombinationen kombinieren können.

Es zeigen schematisch
- Figur 1: ein erfindungsgemäßes Werkzeugsystem mit einem Mehrzweckstaubsauger in Kombination mit einer elektrisch angetriebenen Werkzeugmaschine;
- Figur 2: den schematischen Aufbau des Mehrzweckstaubsaugers; und
- Figur 3: ein Diagramm, das die Signalabläufe über die Zeit darstellt.

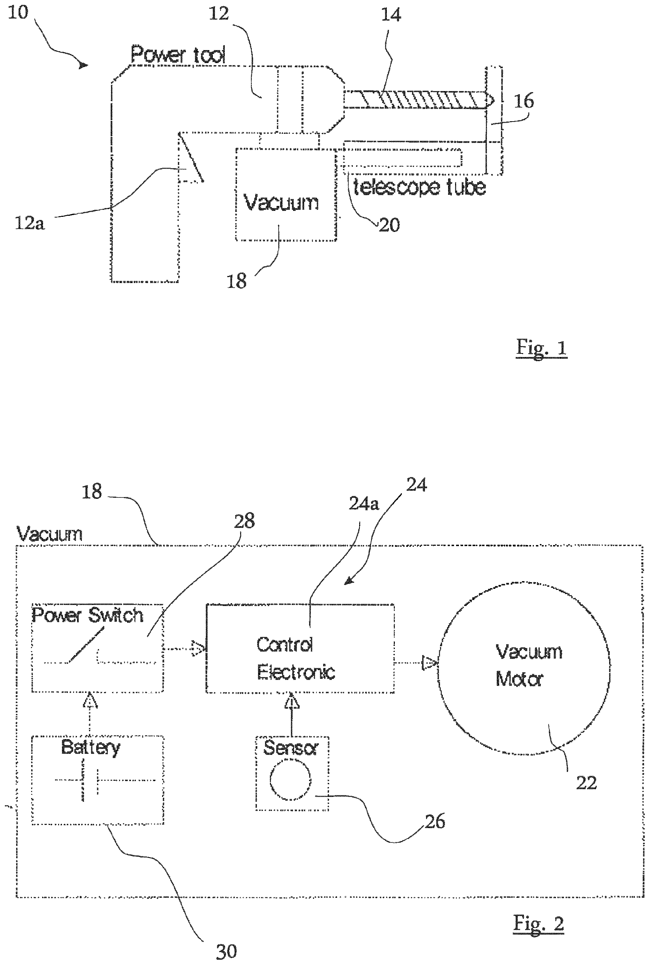

Die nachfolgenden Figuren 1 bis 3 zeigen schematisch eine Ausführungsform der vorliegenden Erfindung. In der Figur 1 ist ein erfindungsgemäßes Werkzeugsystem umfassend eine elektrisch angetriebene Werkzeugmaschine sowie einen erfindungsgemäßen Mehrzweckstaubsauger gezeigt und allgemein mit dem Bezugszeichen 10 bezeichnet.

Die Werkzeugmaschine 12 ist vorliegend als ein Bohrhammer ausgebildet, der über einen Schalter 12a aktiviert und deaktiviert werden kann und an einem Ende ein Bohrwerkzeug 14 zum Anbringen von Bohrungen an einem Werkstück 16 aufweist. Weiterhin ist ein Mehrzweckstaubsauger 18 vorgesehen, der über ein Teleskoprohr 20 verfügt. Der Mehrzweckstaubsauger 18 ist in der dargestellten Ausführungsform besonders klein ausgebildet, um unmittelbar an der Werkzeugmaschine 12 angebracht zu werden. Selbstverständlich kann es sich aber bei dem Mehrzweckstaubsauger 18 auch um einen üblichen, deutlich größeren Staubsauger, zum Beispiel einen Industriestaubsauger oder Haushaltsstaubsauger, handeln.

Der dargestellte Mehrzweckstaubsauger 18 verfügt über ein Teleskoprohr 20, das in einer ausgefahrenen Stellung vorgespannt ist (beispielsweise über eine nicht dargestellte Feder). Bei einem weiteren Eindringen des Werkzeugs 14 in das Werkstück 16 wird das Teleskoprohr 20 in bekannter Weise von dem anliegenden Werkstück 16 gegen die Vorspannung zusammengedrückt. Über das Teleskoprohr als Teil des Mehrzweckstaubsaugers 18 werden die beim Bohren anfallenden Partikel aufgesaugt.

In der Figur 2 ist eine schematische Darstellung des Mehrzweckstaubsaugers 18 dargestellt, die die neben dem Teleskoprohr 20 wichtigsten Komponenten des Saugers 18 zeigt. Demgemäß verfügt der Mehrzweckstaubsauger 18 über einen Motor 22, welcher zum Herstellen des zum Absaugen benötigten Unterdrucks genutzt wird. Zudem ist eine Steuerungseinheit 24a vorgesehen, die von einem Sensor 26 ein entsprechendes Sensorsignal erhält und basierend hierauf den Motor 22 ansteuert. Der Sensor 26 und die Steuerungseinheit 24a sind Komponenten eines Aktivierungsmechanismus 24, der eine Aktivierung und Deaktivierung des Motors 22 in Abhängigkeit von dem Betriebszustand der Werkzeugmaschine 12 ermöglicht.

Der Sensor 26 kann wie in der gezeigten Darstellung Teil des Mehrzweckstaubsaugers 18 sein, beispielsweise kann dieser in dem Teleskoprohr 20 angeordnet sein, oder der Sensor 26 kann alternativ an der Werkzeugmaschine 12 angebracht sein. Vorliegend kann der Sensor 26 innerhalb des Teleskoprohrs 20 eine Verschiebung des Teleskoprohrs 20 bei Kontaktierung des Werkstücks 16 ermitteln und ein entsprechendes Sensorsignal zum Aktivieren des Motors 22 an die Steuerungseinheit 24a übertragen. Alternativ oder zusätzlich kann beispielsweise auch ein sich innerhalb des Teleskoprohrs einstellender Unterdruck, eine von der Werkzeugmaschine 12 emittierte Schallschwingung eine Vibration der Werkzeugmaschine 12 oder des daran angebrachten Mehrzweckstaubsaugers sensorisch ermittelt werden. Die Übertragung des Sensorsignals an die Steuerungseinheit 24a kann dabei kabellos oder über einen Draht oder dergleichen erfolgen.

Zusätzlich ist an dem Mehrzweckstaubsauger 18 gemäß der Figur 2 ein Aktivierungsschalter 28 zum Aktivieren des Aktivierungsmechanismus 24 des Mehrzweckstaubsaugers 18 vorgesehen. Der Aktivierungsschalter 28 dient dazu, den Aktivierungsmechanismus 24 vor Beginn und nach Abschluss eines Arbeitsvorgangs zu aktivieren bzw. zu deaktivieren. Sobald der Aktivierungsmechanismus 24 aktiviert ist, kann die Steuerungseinheit 24a basierend auf einem Sensorsignal des Sensors 26 den Motor 22 bedarfsgerecht ein- und ausschalten.

Schließlich wird der Aktivierungsschalter 28 in der dargestellten Ausführungsform über eine Batterie 30 mit Leistung versorgt. Die Batterie 30 kann alternativ selbstverständlich auch durch eine Wechselstromquelle ersetzt werden, wobei der Mehrzweckstaubsauger 18 in diesem Fall über ein elektrisches Kabel mit der Wechselstromquelle verbindbar ist.

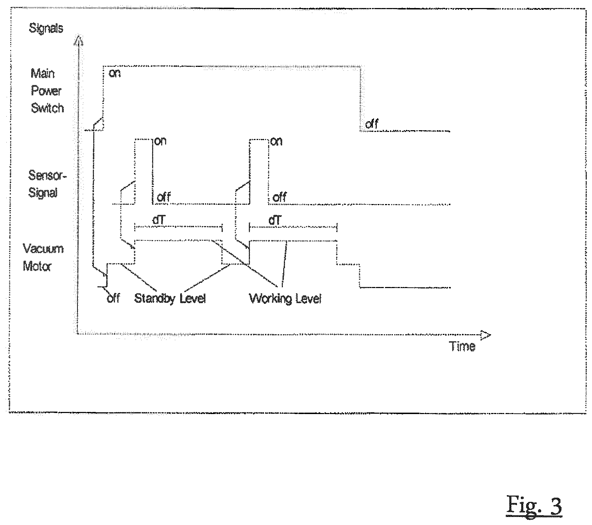

In der Figur 3 sind schließlich die Signalzeiten der einzelnen Signale schematisch über der Zeit dargestellt. Der Motor 22 des Mehrzweckstaubsaugers 18 kann demgemäß nicht nur zwischen einem aktivierten und deaktivierten Betriebszustand (on bzw. off) umgestellt werden, sondern verfügt weiterhin über einen Stand-by-Betriebszustand, in dem der Motor 22 nicht mit einer Arbeitsdrehzahl (=Working Level) in der on-Stellung, sondern einer gegenüber dieser verminderten Drehzahl (=Standby Level)betrieben wird. Auf diese Weise ist es möglich, die Effektivität des Mehrzweckstaubsaugers 18 zu erhöhen, da dieser schneller gegenüber einem vollkommen deaktivierten Sauger auf seine Arbeitsdrehzahl gebracht werden kann.

An dem Diagramm kann man erkennen, dass der Aktivierungsschalter 28 zu Beginn eines vollständigen Arbeitsvorgangs eingeschaltet wird und erst zum Abschluss wieder entsprechend ausgeschaltet wird. Dazwischen erfolgt die Aktivierung bzw. Deaktivierung und das Umschalten in den Stand-by-Betriebsmodus des Motors 22 basierend auf dem Sensorsignal des Sensors 26.

Der erfindungsgemäße Aktivierungsmechanismus bringt gegenüber bekannten Lösungen den Vorteil, dass insbesondere bei Arbeitsvorgängen, bei denen die Werkzeugmaschine immer wieder zwischen einzelnen Arbeitsschritten kurz abgeschaltet wird, beispielsweise wenn eine Reihe von Bohrungen an einem Werkstück vorgesehen werden soll, der Sauger ebenfalls automatisch deaktiviert oder zumindest in einen Stand-by-Betriebszustand gebracht wird, in dem er weniger Strom benötigt und weniger Arbeitslärm verursacht. Hierdurch wird der Arbeitskomfort für den Anwender deutlich erhöht.

Weiterhin wird durch die Verbindung des Mehrzweckstaubsaugers mit der Werkzeugmaschine erfindungsgemäß auch eine elektrische Verbindung bereitgestellt, so dass die Werkzeugmaschine und der Mehrzweckstaubsauger von derselben Stromquelle versorgt werden können.

## Patentansprüche

1. Werkzeugsystem (10) umfassend eine elektrisch angetriebene Werkzeugmaschine (12) sowie einen Mehrzweckstaubsauger (18), insbesondere zur Benutzung mit einer elektrisch angetriebenen Werkzeugmaschine (12), der aufweist:
- einen elektrischen Antrieb (22) zum Antreiben einer Lüftereinheit, und
- eine Stromversorgung zum Zuführen von elektrischen Strom zu dem elektrischen Antrieb des Mehrzweckstaubsaugers (18),
wobei die Stromversorgung ein damit verbundenes elektrisches Kabel umfasst, das es einem Benutzer ermöglicht, die Stromversorgung fallweise mit einer Wechselstromquelle zu verbinden, sowie wenigstens eine mit der Stromversorgung verbindbare wiederaufladbare Batterie (30), die die Stromversorgung mit Gleichstrom versorgen vermag, so dass ein Benutzer den Mehrzweckstaubsauger (18) auch dann nutzen kann, wenn die Stromversorgung nicht über das elektrische Kabel mit einer Wechselstromquelle verbunden ist,
wobei die Stromversorgung des Mehrzweckstaubsaugers (18) ferner wenigstens einen elektrischen Anschluss aufweist, über den eine angetriebene Werkzeugmaschine mittels eines Kabels mit der Stromversorgung des Mehrzweckstaubsaugers (18) verbunden werden kann, so dass die Stromversorgung des Mehrzweckstaubsaugers (18) den elektrischen Strom zum gleichzeitigen Betrieb des Mehrzweckstaubsauger (18) und der verbundenen Werkzeugmaschine (12) sowohl dem elektrischen Antrieb des Mehrzweckstaubsaugers als auch dem elektrischen Antrieb der verbundenen Werkzeugmaschine (12) zuzuführen vermag, unabhängig davon, ob der Mehrzweckstaubsauger (18) mittels einer verbundenen Batterie (30) oder mittels einer Wechselstromquelle mit Strom versorgt wird,
**dadurch gekennzeichnet, dass** die Stromversorgung wenigstens einen weiteren elektrischen Anschluss für wenigstens eine wiederaufladbare Batterie aufweist, über den sie die elektrisch angeschlossene Batterie zu laden vermag, unabhängig davon ob der Mehrzweckstaubsauger und gegebenenfalls eine damit verbundene Werkzeugmaschine in Betrieb sind.

2. Werkzeugsystem (10) nach Anspruch 1,
wobei die Stromversorgung einen Aktivierungsmechanismus (24) zum Ein- und Ausschalten des elektrischen Antriebs (22) des Mehrzweckstaubsaugers (18) umfasst, der geeignet ist, in Abhängigkeit von dem Betriebszustand einer mit dem Mehrzweckstaubsauger (18) verbundenen elektrisch angetriebenen Werkzeugmaschine (12) den elektrischen Antrieb (22) des Mehrzweckstaubsaugers ein- oder auszuschalten,
wobei der Aktivierungsmechanismus (24) einen Sensor (26) umfasst, der geeignet ist, den Betriebszustand der elektrisch angetriebenen Werkzeugmaschine (12) zu detektieren, sowie eine Steuerungseinheit (24a), die basierend auf dem detektierten Betriebszustand der Werkzeugmaschine (12) den elektrischen Antrieb (22) des Mehrzweckstaubsaugers (18) ein- oder auszuschalten vermag.

3. Werkzeugsystem (10) nach Anspruch 1 oder 2,
wobei die Stromversorgung dazu ausgebildet ist, zu ermitteln, ob bei einem aktivierten Mehrzweckstaubsauger und gegebenenfalls einer damit elektrisch verbundenen Werkzeugmaschine die Stromquelle ausrechend Strom zur Verfügung stellt, um weiterhin auch die wenigstens eine über den weiteren elektrischen Anschluss angeschlossene wiederaufladbare Batterie zu laden.

4. Werkzeugsystem (10) nach einem der Ansprüche 1 bis 3,
wobei der Mehrzweckstaubsauger ein Gehäuse umfasst, an dem wenigstens ein Aufnahmeschacht zur sicheren Aufnahme einer mit der Stromversorgung verbindbaren Batterie vorgesehen ist.

5. Werkzeugsystem (10) nach einem der vorhergehenden Ansprüche, wobei der Mehrzweckstaubsauger ein Gehäuse mit wenigstens einem Aufnahme- und/oder Befestigungsabschnitt aufweist, in bzw. an dem wenigstens eine angetriebene Werkzeugmaschine und/oder eine Halterung für ein Ladegerät für wiederaufladbare Batterien sicher aufgenommen und/oder lösbar befestigt werden kann.

6. Werkzeugsystem (10) nach einem der vorhergehenden Ansprüche 2 bis 5, wobei der Sensor (26) des Aktivierungsmechanismus (24) an der verbundenen Werkzeugmaschine (12) anbringbar ist und in Abhängigkeit von der Lage der Werkzeugmaschine (12), von einer Lageveränderung der Werkzeugmaschine (12) oder von einer von der Werkzeugmaschine (12) im Betriebszustand verursachten Schwingung oder einer Druckveränderung ein- oder Ausschalten des Mehrzweckstaubsaugers (18) veranlasst.

7. Werkzeugsystem (10) nach einem der vorhergehenden Ansprüche 2 bis 5, wobei der Mehrzweckstaubsauger mittels seines Absaugschlauchs mit der Werkzeugmaschine verbindbar ist und der Sensor des Mehrzweckstaubsaugers innerhalb des Absaugschlauchs angebracht ist und in Abhängigkeit von einer Lageveränderung des Absaugschlauchs, einer Druckveränderung innerhalb des Absaugschlauchs oder von einer von der Werkzeugmaschine im Betriebszustand verursachten Schwingung am Absaugschlauch ein Ein- oder Ausschaltern des Mehrzweckstaubsaugers veranlasst.

8. Werkzeugsystem (10) nach einem der Ansprüche 6 oder 7,
wobei der Sensor (24) ein kabelloses Signal an eine Empfangseinheit der Steuerungseinheit (24a) des Aktivierungsmechanismus (24) sendet, das von der Steuerungseinheit (24a) verarbeitet wird und basierend auf dem die Steuerungseinheit (24a) die Stromversorgung dazu veranlasst, den elektrischen Antrieb (22) des Mehrzweckstaubsaugers (18) mit Strom zu versorgen oder nicht.

9. Werkzeugsystem (10) nach Anspruch 7,
wobei in dem Absaugschlauch ein Draht vorgesehen ist, der den Sensor mit einer Empfangseinheit der Steuerungseinheit des Aktivierungsmechanismus verbindet, wobei der Sensor über diesen Draht ein Signal an die Empfangseinheit sendet, das von der Steuerungseinheit verarbeitet wird und basierend auf dem die Steuerungseinheit die Stromversorgung dazu veranlasst, den elektrischen Antrieb des Mehrzweckstaubsaugers mit Strom zu versorgen oder nicht.

10. Werkzeugsystem (10) nach einem der Ansprüche 2 bis 9,
wobei der Aktivierungsmechanismus (24) den elektrischen Antrieb ("2) des Mehrzweckstaubsaugers (18) abhängig von dem detektierten Betriebszustand der Werkzeugmaschine (12) in einem Modus mit einer reduzierten Drehzahl (Standby Level) und einem Modus mit einer Arbeitsdrehzahl (Working Level) zu betreiben vermag.

11. Werkzeugsystem (10) nach einem der Ansprüche 2 bis 10,
wobei der Aktivierungsmechanismus (24) mittels eines Aktivierungsschalter (28) aktiviert werden kann.

## Claims

1. A tool system (10) comprising a machine tool (12) and a multi-purpose hoover (18), in particular for use with an electrically driven machine tool (12), comprising:
- an electric drive (22) for driving a fan unit, and
- a power supply for supplying electric power to the electric drive of the multi-purpose hoover (18),
wherein the power supply includes an electrical cable connected thereto for allowing a user to connect the power supply to an AC power source on a case-by-case basis, and at least one rechargeable battery (30) connectable to the power supply for providing DC power to the power supply so that a user can use the multi-purpose hoover (18) even when the power supply is not connected to an AC power source via the electrical cable,
wherein the power supply of the multi-purpose hoover (18) further comprises at least one electrical connection through which a powered machine tool can be connected to the power supply of the multi-purpose hoover (18) by means of a cable, such that the power supply of the multi-purpose hoover (18) is capable of supplying electrical power for simultaneous operation of the multi-purpose hoover (18) and the connected machine tool (12) to both the electrical drive of the multi-purpose hoover and the electrical drive of the connected machine tool (12), regardless of whether the multi-purpose hoover (18) is powered by a connected battery (30) or by an AC power source,
the power supply having at least one further electrical connection for at least one rechargeable battery via which it is capable of charging the electrically connected battery, irrespective of whether the multi-purpose hoover and possibly a machine tool connected thereto are in operation.

2. The tool system (10) according to claim 1,
wherein the power supply comprises an activation mechanism (24) for switching the electric drive (22) of the multi-purpose hoover (18) on and off, the activation mechanism (24) being adapted to switch the electric drive (22) of the multi-purpose hoover on or off in dependence on the operating state of an electrically driven machine tool (12) connected to the multi-purpose hoover (18),
wherein the activation mechanism (24) comprises a sensor (26) adapted to detect the operating condition of the electrically driven machine tool (12) and a control unit (24a) adapted to activate or deactivate the electric drive (22) of the multi-purpose hoover (18) based on the detected operating condition of the machine tool (12).

3. The tool system (10) according to claim 1 or 2,
wherein the power supply is adapted to determine whether, with an activated multi-purpose hoover and, if applicable, a machine tool electrically connected thereto, the power source provides sufficient power to also continue to charge the at least one rechargeable battery connected via the further electrical connection.

4. The tool system (10) according to any one of claims 1 to 3,
wherein the multi-purpose hoover comprises a housing on which at least one receiving slot is provided for securely receiving a battery connectable to the power supply.

5. The tool system (10) according to any one of the preceding claims,
wherein the multi-purpose hoover comprises a housing having at least one receiving and/or mounting section in which at least one powered machine tool and/or a holder for a rechargeable battery charger can be securely received and/or removably mounted.

6. The tool system (10) according to any one of the preceding claims 2 to 5, wherein the sensor (26) of the activation mechanism (24) is attachable to the connected machine tool (12) and causes the multi-purpose hoover (18) to be switched on or off depending on the position of the machine tool (12), a change in position of the machine tool (12) or a vibration caused by the machine tool (12) in the operating state or a change in pressure.

7. The tool system (10) according to any one of the preceding claims 2 to 5, wherein the multi-purpose hoover is connectable to the machine tool by means of its suction hose and the sensor of the multi-purpose hoover is mounted inside the suction hose and causes the multi-purpose hoover to be switched on or off in dependence on a change in position of the suction hose, a change in pressure inside the suction hose or a vibration at the suction hose caused by the machine tool in the operating state.

8. The tool system (10) according to one of claims 6 or 7,
wherein the sensor (24) sends a wireless signal to a receiving unit of the control unit (24a) of the activation mechanism (24), which is processed by the control unit (24a) and based on which the control unit (24a) causes the power supply to power or not the electric drive (22) of the multi-purpose hoover (18).

9. The tool system (10) according to claim 7,
wherein a wire is provided in the suction hose connecting the sensor to a receiving unit of the control unit of the activation mechanism, wherein the sensor sends a signal to the receiving unit via said wire, which signal is processed by the control unit and based on which the control unit causes the power supply to power or not the electric drive of the multi-purpose hoover.

10. The tool system (10) according to any one of claims 2 to 9,
wherein the activation mechanism (24) is adapted to operate the electric drive (22) of the multi-purpose hoover (18) in a reduced speed mode (Standby Level) and a working speed mode (Working Level) depending on the detected operating state of the machine tool (12).

11. The tool system (10) of any one of claims 2 to 10,
wherein the activation mechanism (24) is activatable by means of an activation switch (28).

## Revendications

1. Système d'outillage (10) comprenant une machine-outil à entraînement électrique (12) et un aspirateur à usage multiple (18), en particulier pour une utilisation avec une machine-outil à entraînement électrique (12), ayant:
- un entraînement électrique (22) pour entraîner une unité de ventilation, et
- une alimentation électrique pour fournir de l'énergie électrique à l'entraînement électrique de l'aspirateur multi-usages (18),
dans lequel l'alimentation électrique comprend un câble électrique connecté à celle-ci pour permettre à un utilisateur de connecter l'alimentation électrique à une source d'alimentation CA au cas par cas, et au moins une batterie rechargeable (30) pouvant être connectée à l'alimentation électrique pour fournir une alimentation CC à l'alimentation électrique de sorte qu'un utilisateur puisse utiliser l'aspirateur multi-usages (18) même lorsque l'alimentation électrique n'est pas connectée à une source d'alimentation CA via le câble électrique,
dans lequel l'alimentation électrique de l'aspirateur multi-usages (18) comprend en outre au moins une connexion électrique par laquelle une machine-outil motorisée peut être connectée à l'alimentation électrique de l'aspirateur multi-usages (18) au moyen d'un câble, de telle sorte que l'alimentation électrique de l'aspirateur multi-usages (18) est capable de fournir de l'énergie électrique pour un fonctionnement simultané de l'aspirateur multi-usages (18) et de la machine-outil connectée (12) à la fois à l'entraînement électrique de l'aspirateur multi-usages et à l'entraînement électrique de la machine-outil connectée (12), que l'aspirateur multi-usages (18) soit alimenté par une batterie connectée (30) ou par une source d'alimentation en courant alternatif,
le bloc d'alimentation présente au moins une autre connexion électrique pour au moins une batterie rechargeable, par laquelle il est capable de charger la batterie connectée électriquement, indépendamment du fait que l'aspirateur multi-usages et éventuellement une machine-outil connectée à celui-ci soient en fonctionnement.

2. Système d'outillage (10) selon la revendication 1,
dans lequel l'alimentation électrique comprend un mécanisme d'activation (24) pour mettre en marche et arrêter l'entraînement électrique (22) de l'aspirateur multi-usages (18), le mécanisme d'activation (24) étant adapté pour mettre en marche ou arrêter l'entraînement électrique (22) de l'aspirateur multi-usages en fonction de l'état de fonctionnement d'une machine-outil à entraînement électrique (12) connectée à l'aspirateur multi-usages (18),
dans lequel le mécanisme d'activation (24) comprend un capteur (26) adapté pour détecter la condition de fonctionnement de la machine-outil à entraînement électrique (12) et une unité de commande (24a) adaptée pour activer ou désactiver l'entraînement électrique (22) de l'aspirateur multi-usages (18) sur la base de la condition de fonctionnement détectée de la machine-outil (12).

3. Système d'outillage (10) selon la revendication 1 ou 2,
dans lequel l'alimentation est adaptée pour déterminer si, avec un aspirateur polyvalent activé et, le cas échéant, une machine-outil connectée électriquement à celui-ci, la source d'alimentation fournit une puissance suffisante pour continuer également à charger la au moins une batterie rechargeable connectée via l'autre connexion électrique.

4. Système d'outillage (10) selon l'une quelconque des revendications 1 à 3,
dans lequel l'aspirateur multi-usages comprend un boîtier sur lequel au moins une fente de réception est prévue pour recevoir de manière sûre une batterie pouvant être connectée à l'alimentation électrique.

5. Système d'outillage (10) selon l'une quelconque des revendications précédentes, dans lequel l'aspirateur multi-usages comprend un boîtier ayant au moins une section de réception et/ou de montage dans laquelle au moins une machine-outil motorisée et/ou un support pour un chargeur de batterie rechargeable peuvent être reçus de manière sûre et/ou montés de manière amovible.

6. Système d'outillage (10) selon l'une quelconque des revendications précédentes 2 à 5,
dans lequel le capteur (26) du mécanisme d'activation (24) peut être fixé à la machine-outil (12) connectée et provoque la mise en marche ou l'arrêt de l'aspirateur polyvalent (18) en fonction de la position de la machine-outil (12), d'un changement de position de la machine-outil (12) ou d'une vibration provoquée par la machine-outil (12) à l'état de fonctionnement ou d'un changement de pression.

7. Système d'outillage (10) selon l'une quelconque des revendications précédentes 2 à 5,
dans lequel l'aspirateur multifonctionnel peut être relié à la machine-outil par son tuyau d'aspiration et le capteur de l'aspirateur multifonctionnel est monté à l'intérieur du tuyau d'aspiration et provoque la mise en marche ou l'arrêt de l'aspirateur multifonctionnel en fonction d'un changement de position du tuyau d'aspiration, d'un changement de pression à l'intérieur du tuyau d'aspiration ou d'une vibration au niveau du tuyau d'aspiration provoquée par la machine-outil dans l'état de fonctionnement.

8. Système d'outillage (10) selon l'une des revendications 6 ou 7,
dans lequel le capteur (24) envoie un signal sans fil à une unité de réception de l'unité de commande (24a) du mécanisme d'activation (24), qui est traité par l'unité de commande (24a) et sur la base duquel l'unité de commande (24a) amène l'alimentation électrique à alimenter ou non l'entraînement électrique (22) de l'aspirateur multi-usages (18).

9. Système d'outillage (10) selon la revendication 7,
dans lequel un fil est prévu dans le tuyau d'aspiration reliant le capteur à une unité de réception de l'unité de commande du mécanisme d'activation, dans lequel le capteur envoie un signal à l'unité de réception via ledit fil, lequel signal est traité par l'unité de commande et sur la base duquel l'unité de commande amène l'alimentation électrique à alimenter ou non l'entraînement électrique de l'aspirateur multi-usages.

10. Système d'outillage (10) selon l'une quelconque des revendications 2 à 9, dans lequel le mécanisme d'activation (24) est adapté pour faire fonctionner l'entraînement électrique (22) de l'aspirateur polyvalent (18) dans un mode de vitesse réduite (Standby level) et un mode de vitesse de travail (Working level) en fonction de l'état de fonctionnement détecté de la machine-outil (12).

11. Système d'outillage (10) de l'une quelconque des revendications 2 à 10, dans lequel le mécanisme d'activation (24) est activable au moyen d'un commutateur d'activation (28).
